**Europäisches Patentamt**

**European Patent Office**

**Office européen des brevets**

(19)

(11) **EP 1 541 601 A1**

(12) **EUROPEAN PATENT APPLICATION**

(43) Date of publication:
**15.06.2005 Bulletin 2005/24**

(51) Int Cl.⁷: **C08F 255/02**

(21) Application number: **03104602.2**

(22) Date of filing: **09.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **SOLVAY (Société Anonyme)**
**1050 Bruxelles (BE)**

(72) Inventors:
 • **Giacobbi, Emmanuele**
 **43100, Parma (IT)**

 • **Miglioli, Christian**
 **26100, Cremona (IT)**

(74) Representative: **Jacques, Philippe**
 **Solvay S.A.**
 **Département de la Propriété Industrielle,**
 **Rue de Ransbeek, 310**
 **1120 Bruxelles (BE)**

(54) **Improved process for producing silane crosslinked polyethylene**

(57)    The present invention is directed to a process for producing silane crosslinked (cured) polyethylene in which a polyethylene is grafted with a silane comprising at least one ethylenic double bond to a silane crosslinkable polyethylene which is then subjected to a crosslinking (curing) step, characterized in that the process comprises the following process steps:

 a) a sample is taken from the silane crosslinkable polyethylene before the curing step,
 b) the sample is processed into a film,
 c) the film is analyzed by Infrared Spectroscopy,
 d) a predefined area of the IR spectrum is determined and
 e) the area determined in step d) is correlated with the gel content in the silane crosslinked polyethylene after the curing step using a predetermined regression curve.

Figure 1

**EP 1 541 601 A1**

**Description**

The present invention is directed to an improved process for producing silane crosslinked polyethylene, in particular for producing three-dimensional articles of silane crosslinkable polyethylene, in particular pipes. A certain protocol is used based on IR measurements which allow to assess the quality of silane crosslinkable polyethylene before it is finally cured.

Crosslinking of polyethylene is well known and used to extend the range of possible applications of this polymer. By crosslinking the mechanical properties of the thermoplastic polyethylene are improved and in particular a crosslinked polyethylene has more resistance to extreme temperatures, resistance to slow crack growth and chemical resistance than non-crosslinked polyethylene. In addition to crosslinking by peroxide and by irradiation, silane crosslinking is of growing importance. Silane crosslinked polyethylene is widely used in particular in the cable industry and for insulation purposes and, probably even more important, in the pipe industry for transportation of cold and hot water, oil products and natural gas.

Silane crosslinked polyethylene is produced from polyethylene in a two step process. In a first reaction step of this process a silane is grafted on the polymer chains. For this reaction, polyethylene is treated with a free radical source, usually a peroxide, such as a diaralkyl or a dialkyl peroxide, e.g. dicumyl peroxide (DCUP) or 2,5-dimethylhexane-2,5-di-tert.-butyl peroxide (DHBP). The peroxide decomposes thermally, and radicals are formed which abstract hydrogen atoms from the polyethylene chains. The activated polyethylene chains then react with the vinyl groups of vinyl silanes, whereby vinyl trimethoxy silane (VTMOS) is presently most widely used in industry. The silane molecules are thus chemically bonded to the polyethylene chain to form the silane crosslinkable polyethylene.

In the second reaction step an article which has been shaped from the silane crosslinkable polyethylene and which usually contains a suitable catalyst is subjected to heat in an aqueous media, preferably in hot water or steam, whereby Si-O-Si bonds are formed and curing (or crosslinking) occurs.

There are principally two different types of processes for producing shaped articles of silane crosslinked polyethylene, the single stage and the two stage process. In the single stage process all the ingredients, polyethylene, vinylsilane, peroxide and curing catalyst, are processed in an extruder in a single operation and extruded as a semi-finished product, usually already in the form of the three-dimensional article of the silane crosslinkable polyethylene, e.g. the pipe. This extrusion product which already contains the curing catalyst is then heat-treated in hot water or steam to crosslink the silane crosslinkable polyethylene.

In the two stage process the graft polymerization reaction and the fabrication of the semi-fmished product are carried out separately. In an initial compounding step polyethylene is reacted with the peroxide and the vinylsilane which is grafted on the chain radical, and a silane crosslinkable polyethylene is obtained, usually in the form of granules, which can be stored under exclusion of water before they are further processed. The granules are then mixed with a catalyst (if necessary), extruded into the final shape, e.g. the pipe, and cured by applying heat and water.

A good overview over the preparation of shaped articles of silane crosslinked polyethylene can be found e. g. in "Plastics and Rubber Processing and Applications, 13 (1990) 81-91 ".

The present invention is applicable to the one stage process and to the two stage process, but preferred is the two stage process, wherein first granules of silane crosslinkable polyethylene are produced which in a second stage are further processed into a shaped article and cured.

Quality control of the processes to prepare shaped articles of silane crosslinked polyethylene is very difficult, because the quality of the end product significantly depends on the amount of crosslinking (i.e. gel formation) which occurs in the last step of the production of the shaped article when the article is cured under high temperature and humidity. Usually the quality of the shaped article is determined by taking slices from the crosslinked article which are then treated with a solvent for polyethylene, usually xylene. The amount of the sample which is not soluble in xylene is determined, which corresponds to the amount of the shaped article which is cured (because cured polyethylene is no longer soluble in xylene). This method is described in several normatives, such as DIN 16892.

This method takes a long time, since curing of the shaped article may take several hours or even several days and requires the use of flammable and toxic solvents such as xylene. Furthermore, before information on the quality of the cured shaped article is available by this method, usually several further articles have already been cured which are equally unsatisfactory. Generally, it is not possible to recycle the cured articles.

It would be highly advantageous to have a method for evaluating the silane crosslinkable polyethylene prior to the curing step. If this method would show that a certain charge of silane crosslinkable polyethylene is unsuitable for curing (and does not yield a satisfactory cured article), already the silane crosslinkable polyethylene could be discharged, and very often the silane crosslinkable polyethylene can be recycled, which is not possible after curing. Of course, such a method should be easy, fast, reliable, reproducible and not involve the use of hazardous chemicals such as xylene.

The amount of crosslinking which occurs when the formed article is cured strongly depends on the amount of crosslinkable silane which is chemically bonded on the polyethylene chain. This amount is influenced by many parameters, e.g. the amount of vinylsilane and peroxide which is compounded with the polyethylene but also the reaction conditions, such as temperature, pressure and compounding time in the extruder in which the grafting of the vinylsilane onto the polyethylene is usually carried out.

It should principally be possible to determine the amount of crosslinkable silane groups in the crosslinkable polyethylene by infrared spectroscopy, and there exists a high number of scientific investigations of the grafting process using among other methods also IR-spectroscopy. To mention just some of these documents, it can e.g. be referred to "Journal of Applied Polymer Science, Vol. 48, 1579-1585 (1993)", "KGK Kautschuk Gummi Kunststoffe (49) 1/96, 22-27", "Jiangsu Shiyou Huagong Xueyuan Xuebao, 9 (4), 10-14, 1997", "Jiangsu Shiyou Huagong Xueyuan Xuebao, 10 (4), 17-19, 1998", "Sichuan Daxue Xuebao, Gongcheng Kexueban, 34 (1), 6-10, (2000)", "Huaxue Yu Nianhe, (3), 113-116, 139, (2000)", "Polymer Preprints, Vol. 39, No. 2, (1998), 697-698" and "Journal of Applied Polymer Science, Vol. 69, (1998), 255-261". As far as these documents use IR-spectroscopy for analyzing silane crosslinkable polyethylenes, they mostly measure the Si-O-C peak in the IR-spectra and conclude from this peak to the amount of vinylsilane which is present in the silane crosslinkable polyethylene.

However, none of these scientific articles provides a reliable method for determining the quality of the cured article from the IR-spectrum of the silane crosslinkable polyethylene. Furthermore, the IR-peak of the Si-O-C bond does not provide information whether the vinylsilane is indeed chemically bonded to the polyethylene chain (otherwise it might evaporate during storage of the silane crosslinkable polyethylene) or whether free peroxide is still present in the silane crosslinkable polyethylene, which can influence the quality of the cured article.

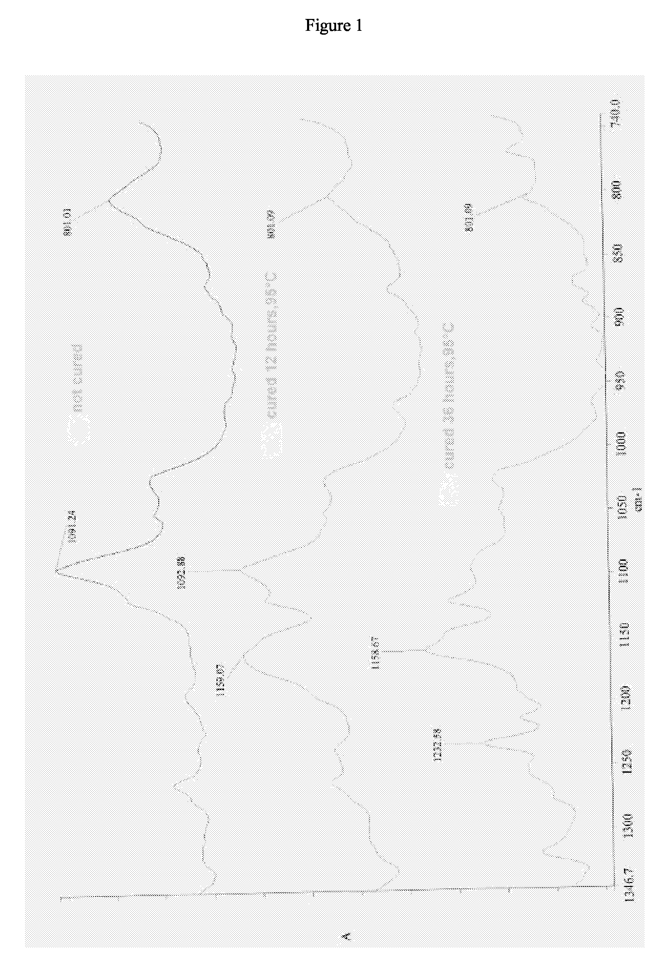

Attempts have been made to assess the quality of the shaped articles of silane crosslinked polyethylene by measuring the infrared spectrum of a sample of the cured article. However, this solves only some of the problems, because this method is fast and avoids the use of hazardous chemicals, but it is carried out after the curing, which is disadvantageous as discussed above. Furthermore, if infrared spectroscopy is used for measuring a sample of silane crosslinked polyethylene, usually the intensity of the peak corresponding to the Si-O-Si bond (which is the crosslinking bond) is determined. This peak overlaps with the peak corresponding to the Si-O-C bond which is present in uncured product, and therefore, the IR spectrum of silane cured polyethylene is not sufficiently reliable to determine the amount of silane cured polyethylene in the shaped article, as it is evidenced in figure 1.

There were also attempts to develop a method for assessing the quality and crosslinkability of silane crosslinkable polyethylene using infrared spectroscopy, and it can be referred e.g. to "Kunststoffe 79 (1989) 11, 1165-1167", "Kunststoffe 79 (1989) 10, 1051-1056", "Plastics and Rubber Processing and Applications, Vol. 13, No. 2, 1990, 81-91" and "Non-destructive Characterization of Materials IV edited by C. O. Ruud et al. Plenum Press, New York, 1991, 121-133". The methods disclosed in the above documents are based on the above assumption that the crosslinkability of the silane crosslinkable polyethylene cannot reasonably be predicted on the basis of the Si-O-C peak in the IR-spectrum alone, because this peak does not provide information whether the silane is chemically bonded to the polyethylene chain. Accordingly, these documents suggest methods in which the peak corresponding to the Si-O-C bond in the IR-spectra is measured as an indication of the amount of silane in the polyethylene, and peaks corresponding to the $CH_2$=CH bond of the silane are measured as an indication of how many of the silane groups are chemically bonded to the polyethylene. From these two values conclusions are drawn, how many silane crosslinkable groups are available for the crosslinking reaction. It is also acknowledged, e.g. in "Nondestructive characterization of Materials IV, edited by C. O. Ruud et al., Plenum Press, New York, 1991, 121-133" on page 125 that it is necessary to measure the peroxide contents in the silane crosslinkable polyethylene in order to obtain reliable information on the quality of the silane crosslinkable polyethylene. However, the peroxide which is still present in the silane crosslinkable polyethylene is usually very small and can be detected by IR-spectroscopy only under enormous problems. For determining the peroxide contents, the document suggests that rheological data is obtained, e.g. by use of an online rheometer.

The process disclosed in the above documents has many disadvantages. The peaks in the IR-spectrum corresponding to the $CH_2$=CH bond of the vinylsilane are very small, and it is difficult to analyze changes in these peaks with sufficient accuracy. This problem becomes even more acute, if the IR-spectrum is not taken online in the melt of the silane crosslinkable polyethylene (as suggested in all these documents) but from a sample of the solid product, e.g. the granules which are obtained by extrusion of the polyethylene, the vinylsilane and the peroxide. If the IR spectrum is taken in the melt, the silane peaks tend to be rather small and well defined. After the silane crosslinkable polyethylene leaves the extruder and comes into contact with air, some amount of crosslinking occurs which broadens the peaks in the IR spectrum (because the peak of the resulting Si-O-Si bond overlaps with the peak of the Si-O-C bond) making the analysis described in the prior art even more inaccurate than in the melt. Therefore, the process described in the above prior art documents is largely restricted to measuring the IR spectrum of polyethylene melts. For such measurements sophisticated equipment such as an online IR spectrometer is required, which is expensive and difficult to use. It is not possible, or at least not economical, to adapt existing production lines for silane crosslinkable polyethylenes with online IR spectrometers and/or online rheometers.

A further problem occurs, if one tries to analyze HDPE (high-density polyethylene) with the method disclosed in the above referenced prior art documents. The density of HDPE is higher than the density of the LLDPE and the VLDPE (low-density polyethylenes) which were used for developing the method described in the above referenced prior art documents. It is more difficult to analyze the IR-spectrum of a HDPE, because the resolution of the spectrum is lower. Therefore, the reliability of the prior art methods is even lower with HDPE than with LLDPE or VLDPE.

The above shortcomings and in particular the low accuracy and high investment costs of the methods disclosed in the prior art prevented that quality control of silane crosslinked polyethylene by infrared spectroscopy has been practically used in industry. In fact, at present only the standard techniques are used which are based on dissolving the finally cured shaped articles.

It would be desirable to have a method for determining the quality of the cured shaped article of silane crosslinked polyethylene which is not restricted to measurements in the melt but which can also be used with existing production lines for producing silane crosslinkable polyethylene and which can also be used with solidified silane crosslinkable polyethylene, such as granules or slices of the shaped silane crosslinkable polyethylene e.g. immediately prior to curing.

Furthermore, it would be advantageous to have a method for predicting the quality of shaped articles of silane crosslinked polyethylene which is accurate and does not require the measurement of additional rheometry data but which requires only the measurement of an IR-spectrum.

The present invention is based on the unexpected finding that an analysis of some part of the IR-spectrum of the silane crosslinkable polyethylene prior to curing can be used for assessing the quality of the finally cured shaped article of silane crosslinked polyethylene, if a certain type of analysis is carried out.

Accordingly, the present invention provides a process for producing silane crosslinked (cured) polyethylene in which a polyethylene is grafted with a silane comprising at least one ethylenic double bond to a silane crosslinkable polyethylene which is then subjected to a crosslinking (curing) step, characterized in that the process comprises the following process steps:

a) a sample is taken from the silane crosslinkable polyethylene before the curing step,
b) the sample is processed into a film,
c) the film is analyzed by Infrared Spectroscopy,
d) a predefined area of the IR spectrum is determined and
e) the area determined in step d) is correlated with the gel content in the silane crosslinked polyethylene after the curing step using a predetermined regression curve.

The new process of the present invention which allows to assess the quality of silane crosslinked or cured polyethylene from the IR spectrum of the crosslinkable material prior to curing is very generally applicable. It is not only applicable to ethylene homopolymers on which a silane molecule has been grafted but also to ethylene based copolymers. The type of comonomer is not specifically restricted, and the term "copolymer" also encompasses copolymers which are built from three or more different types of monomers. Thus, if in the present specification it is referred to a polyethylene, it should be understood that this term comprises polyethylene homopolymers but also polymers which are composed of ethylene and one or more comonomers, for example, copolymers of ethylene with $C_3$-$C_8$ alkenes such as copolymers of ethylene with one or more of propylene, butene and octene. Copolymers of ethylene with other olefins such as acrylates, methacrylates, styrene, vinylsilanes such as vinyltrimethoxysilane, vinyltriethoxysilane, vinylmethyldimethoxysilane and vinylmethyldiethoxysilane or vinyl acetate. Preferably, 50% or more of the monomer units of the polyethylene are derived from ethylene monomers. More preferably 75% or more of the monomer units, in particular 90% or more, of the monomer units of the polyethylene are derived from ethylene monomers. Of the copolymers, copolymers with propylene and butene are preferred. Most preferred are homopolymers of ethylene, and the term "polyethylene" as used in the present specification preferably refers to an ethylene homopolymer.

The present invention is applicable to all kinds of ethylene homopolymers, in particular to HDPE, LDPE, LLDPE and VLDPE.

The term "silane crosslinked or cured polyethylene" according to the present specification refers to a polyethylene which has been subjected to a curing step, so that crosslinking under formation of Si-O-Si bonds has occurred. Contrary thereto, the term "silane crosslinkable polyethylene" refers to a polyethylene which has not yet been subjected to a curing step but which is intended to be subjected to a curing step. It is understood that some crosslinking might already have occurred in a silane crosslinkable polyethylene, and thus, a silane crosslinkable polyethylene might already contain some Si-O-Si bonds, depending on the process conditions of the process for producing the silane crosslinkable polyethylene and eventually on the storage conditions and storage time of the silane crosslinkable polyethylene prior to subjecting the silane crosslinkable polyethylene to the curing or crosslinking process. A skilled person is aware of the meaning of the terms "silane crosslinkable polyethylene" and "silane crosslinked or cured polyethylene" as used within the specification: the one term ("silane crosslinkable polyethylene") refers to a product which is intended for curing but has not yet been cured and the other term ("silane crosslinked (cured) polyethylene") refers to a product which has already been subjected to a curing step and is the finally cured product which is intended for end use. The curing step usually consists of subjecting the silane crosslinkable polyethylene to a heat treatment in the presence of water for several hours to several days, and therefore, the term "silane crosslinkable polyethylene" refers to a product which has not been subjected to such a curing step while the term "silane crosslinked (cured) polyethylene" refers to a product which has been subjected to such a curing step.

The present invention is also applicable to all kinds of silanes which can be grafted on polyethylene which usually are silanes comprising at least one ethylenic double bond. In practice the silanes comprising at least one ethylenic double bond are preferably vinylsilanes, and all kinds of vinylsilanes which can be used for crosslinking polyethylene can be used in the process of the invention. Most commonly used are vinylsilanes comprising two or three alkoxy groups, preferably vinylsilanes comprising two or three $C_1$-$C_6$ alkoxy groups, most preferably vinylsilanes comprising two or three $C_1$-$C_3$ alkoxy groups, in particular methoxy or ethoxy groups. Vinylsilanes comprising three alkoxy groups are particularly preferred, as they provide a particularly dense crosslinking. Examples of suitable vinylsilanes are vinyltrimethoxysilane, vinyltriethoxysilane, vinylmethyldimethoxysilane, vinylmethyldiethoxysilane, vinyldimethoxyethoxysilane and vinyldiethoxymethoxysilane. Most preferred are vinyltrimethoxysilane and vinyltriethoxysilane and vinyltrimethoxysilane is presently most widely used and particularly preferred according to the present invention.

Suitable concentrations of the silane in the process are from 0.1 to 5, preferably from 0.5 to 2.5, e.g. 1.1 or 1.5.

While the present invention is useful with all processes for producing silane crosslinked (cured) polyethylene, its widest application is probably in a process for producing shaped articles and parts of shaped articles comprising a silane crosslinked (cured) polyethylene. Most preferred is a process for producing shaped articles of silane crosslinked (cured) polyethylene.

Shaping the silane crosslinkable polyethylene and curing it is well known to a skilled person. Several processes are commercially used, and for details it can e.g. be referred to the documents cited in the introductory part of the present specification and to the publicly available documentation for the commercial processes. According to the invention the two stage process for preparing silane crosslinked (cured) polyethylene is preferred over the one stage process as defined above.

Usually the curing is effected by applying heat and moisture for a significant time, optionally in the presence of a suitable curing catalyst. For example, in the two stage process, in the first stage silane crosslinkable polyethylene is produced e.g. in the form of granules which can be stored. The granules are then optionally mixed with a suitable curing catalyst, such as dialkyl tin mercaptide, a dialkyl tin dilaurate, in particular dibutyl tin dilaurate, and stannous octoate, shaped into the required form, e.g. a pipe, and crosslinking is effected by applying heat and moisture, e.g. in boiling water, for several hours to several days, such as 1 hour to 4 days, e.g. 6 hours to 2 days. The specific process steps and possible variations thereof are well known to a skilled person.

The shaped products which are preferably obtained by the process of the present invention are most preferably pipes.

The grafting of the silane to the polyethylene is usually carried out in the presence of a free radical source. Such a free radical source can be a chemical compound or some kind of radiation which creates free radicals on the polyethylene chain which can then react with the ethylenic double bond of the silane compounds. If it is referred in this specification to a "concentration of free radical source", this means the concentration of a chemical compound which can form radicals in the mixture of polyethylene and silane compound or to the amount of radiation which can form radicals on the polyethylene chain. Preferably, the free radical source is a chemical substance such as a diazo compound or a peroxide, and suitable peroxides are diaralkyl and dialkyl peroxides such as dicumyl peroxide (DCUP) and 2,5-dimethylhexane-2,5-di-t-butyl peroxide (DHBP). Other suitable peroxides are known to a skilled person, like tert-butylamylperoxide (BCUP) or di-(tert-butyl)-peroxide (DTBP).

Suitable concentrations of the free radical source, in particular of the peroxide, in the process are from 0.001 to 1, preferably from 0.005 to 0.5, e.g. 0.05 or 0.25.

Suitable radiation is e.g. radiation by electrons, gamma rays or UV light. A suitable amount of radiation is known to a skilled person.

In the process of the present invention, a sample is taken from the silane crosslinkable polyethylene before the curing step. The sample can be taken anywhere from the production line prior to curing. In a two stage process as discussed above and in the introductory part of this specification, which is the preferred process of the present invention, the sample will usually be taken from the granules produced in the first stage of this process. In those processes where a shaped article is formed from the silane crosslinkable polyethylene (preferred processes), it is, of course, also possible to obtain a sample directly from the shaped products of silane crosslinkable polyethylene. It is also possible to obtain some crosslinkable polyethylene immediately after the grafting process or from the melt during the grafting process. However, it is preferred that the sample is taken from the solidified product after the grafting process.

The sample is processed into a film in a manner known per se. Preferably, the sample is pressed to a film in a usual device for preparing samples for infrared spectroscopy. The sample can be processed into a film e.g. by applying heat, optionally in addition to applying pressure, and it is possible to melt the sample and prepare a film in a manner known per se. If a sample is taken from the production line of the silane crosslinkable polyethylene, the sample usually is in the form of a melt (not preferred) and can be directly processed to a film which is suitable for IR spectroscopy.

The film is analyzed by infrared spectroscopy, and it is a significant advantage of the process of the present invention that any known and commercially available IR spectrometer can be used. Preferably, the analysis is carried out by Fourier transform infrared spectroscopy (FTIR) using commercially available FTIR spectrometers. FTIR spectrometers are e.g. available from the company Perkin Elmer. According to the present invention it is not necessary to use a specific online spectrometer which has been used in some prior art references discussed above.

The IR measurement can be made by transmission technique, which is preferred, or by the attenuated total reflection (ATR) technique. A suitable spectrometer for the ATR technique is e.g. the TravelIR from Perkin Elmer. Other IR techniques can also be used.

While it is not preferred, it is, of course, also possible to combine the spectrometer with the production line of the silane crosslinkable polyethylene, so that a sample of the silane crosslinkable polyethylene is automatically taken after a certain time period, processed to a film and analyzed by the IR spectrometer, in particular the FTIR spectrometer.

Important for the invention is that a predefined area of the IR spectrum is determined. The predetermined area of the IR spectrum roughly corresponds to the area of the Si-O-C peak which corresponds to the bond between the silicon atom and the alkoxy group of the silane molecule. This peak can overlap with other peaks such as the Si-O-Si peak or the Si-OH peak, but it was found that such an overlap between the peaks does not negatively affect the process of the present invention. Usually, the area of the IR spectrum (or the FTIR spectrum) is measured starting at a wave number in the range from 1150 cm$^{-1}$ to 1205 cm$^{-1}$ and ending at a wave number in the range from 1000 cm$^{-1}$ to 1085 cm$^{-1}$. Preferably, the area is measured starting in the range from 1150 cm$^{-1}$ to 1185 cm$^{-1}$ and ending in the range from 1020 cm$^{-1}$ to 1060 cm$^{-1}$. Typical ranges for taking the area of the peak(s) are 1155 - 1041 or 1155 - 1042 or 1155 - 1043 or 1155 - 1144 or 1156 - 1041 or 1156 - 1042 or 1156 - 1043 or 1156 - 1044 or 1157 - 1041 or 1157 -1042 or 1157 -1043 or 1157 -1044 or 1158 -1041 or 1158 - 1042 or 1158 -1043 or 1158 -1044 or 1159 -1041 or 1159 -1042 or 1159 - 1043 or 1159 - 1044.

The area is usually determined electronically by the software provided with the IR spectrometer, but it is also possible to determine the area by other ways, such as graphically, or by a separate computer system. Usually for determining the area electronically, an IR spectrum of the polyethylene not containing any silane is subtracted from the IR spectrum of the silane crosslinkable polyethylene, and the area is measured on the difference spectrum.

Unexpectedly it was found that it is possible to correlate the so-determined area with the gel content of the silane crosslinked (cured) product by using a predetermined regression curve. The regression curve correlates the amounts of silane used in the process and the amount of free radical source used in the process with the amount of crosslinking which occurs during the curing process and thus with the quality of the final product.

The regression curve is preferably obtained as follows.

First of all, a certain amount of silane crosslinkable polyethylene samples, usually four or more, preferably five or more, more preferably six or more, are prepared with a standard concentration of free radical source such as 0.005, 0.1, 0.15, 0.2, 0.25 or 0.3% and varying concentrations of silane. The varying silane concentrations can be as follows: 0%, 1%, 1.3%, 1.5%, 1.8%, 2.2%. Of course, the above specific concentrations are only exemplary, and it is possible to use other percentages. One measurement should be with a silane concentration of 0%. With the above silane concentrations excellent results have been achieved. If a higher accuracy of the method is required, it is also possible to increase the number of samples with varying silane concentrations, e.g. to 9 or more, preferably to 10 or more, more preferably to 11 or more, and choose e.g. the following silane concentrations: 0%, 1%, 1,2%, 1.3%, 1,4%, 1.5%, 1.7%, 1.8%, 2.0%, 2.2% and 2.4% or similar concentrations.

Then a certain amount of silane crosslinkable polyethylene samples, usually four or more, preferably five or more, more preferably six or more samples are produced with a standard silane concentration such as one of the silane concentrations mentioned above and varying peroxide concentrations. Suitable peroxide concentrations are e.g. 0.04%, 0.06%, 0.1% and 0.25%. If a higher accuracy of the method is required, the number of samples with a varying peroxide concentration can be increased, e.g. to 8 or more, preferably to 9 or more, more preferably to 10 or more, and e.g. the following peroxide concentrations can be used: 0.04%, 0.06%, 0.07%, 0.08%, 0.15%, 0.18%, 0.2%, 0.21%, 0.25% and 0,3%. Again, these specific numbers are only exemplary, and other numbers can equally be used. With the above numbers, excellent results have been achieved.

Optionally further samples are prepared, preferably four or more, more preferably five or more or six or more, where random combinations of the above mentioned silane concentrations and peroxide concentrations are used.

Preferably the concentrations of the silane compounds and the peroxide compounds used for preparing the samples above are in the same range as the peroxide concentrations and the silane concentrations which are used in the commercial process for producing the silane crosslinked (cured) polyethylene, which should be controlled by the method of the invention.

Of each of the samples produced above, a film of controlled thickness (e.g. 0.1 to 5 mm, preferably 0.5 to 3 mm, e.g. about 2 mm) is obtained in a manner known per se, e.g. in a usual heatable press, and the IR spectrum of each sample is measured. From each spectrum the spectrum of the sample with 0% silane is subtracted, and all spectra are normalized using the $CH_3$ peak. A predefined area of the IR spectrum of each sample is determined at the ranges mentioned above, e.g. in the range from 1200 cm$^{-1}$ to 1000 cm$^{-1}$.

From the silane crosslinkable polyethylene of each of the above samples an article, in particular a shaped article such as a pipe is produced and cured in the same way as in the final commercial process, which is to be controlled by the present invention, e.g. the (shaped) article is put into water of above 95°C for a sufficient time such as 2 hours or more. Following a traditional well-established method such as DIN16829 or ASTMD2765 using e.g. xylene as a solvent, the gel content of each (shaped) article is measured and the gel content is plotted against the area of the peak of the IR spectrum determined for each sample as explained above. The data points are connected by a regression curve which can either be determined graphically or by usual mathematical methods such as a Simplex method or other suitable regression methods. Good results have been obtained by fitting a logarithmic curve to the data points using a Simplex method. The regression curve can then be used to analyze the silane crosslinkable polyethylene during the production and to predict the gel content of the final silane crosslinked (cured) article with a high precision. Of course, as it will be understood by a skilled person, the above method for obtaining the regression curve can be repeated one or more times, preferably in intervals of a few days or a few weeks in order to increase the accuracy of the method. The additional data points can be used to improve the regression curve.

During the production of the silane crosslinked (cured) polyethylene after a predetermined time, e.g. every 1 hour or every two hours or after changing some of the process settings, a sample is taken from the production line, e. g. from the granules of the silane crosslinkable polyethylene or from the shaped article prior to curing or from another point of the production line and processed into a thin film having a thickness as indicated above which can be subjected to IR spectroscopy, e.g. by pressing or extrusion or some other suitable method. This film is then measured by IR spectroscopy and analyzed as discussed above. From the area measured in the IR spectrum, it can be directly concluded to the gel content of the final product, which allows an excellent process control. If the method shows that the gel content of the finally cured product is outside of a predetermined tolerance range of e.g. ± 20%, preferably ± 10%, more preferably ± 5%, the silane crosslinkable polyethylene can be recycled, and it is not necessary to cure it to find out that the product will not have the required gel content. Furthermore, it is possible to adjust the specific process conditions such as concentrations of silane, free radical source, temperature, process time, etc. in order to modify the silane crosslinkable polyethylene in order to achieve a gel content of the finally cured product as required.

The process for obtaining the regression curve has been explained using exemplary numbers of silane concentrations and peroxide concentrations, and it should be understood that these numbers are not limiting but only examples of suitable concentrations. Furthermore, while the measurements for obtaining the regression curve have been described with respect to a peroxygen as free radical source, the method is, of course, equally applicable with other free radical sources as disclosed in the general part of the present specification.

If nothing else is mentioned in this specification, percentages and parts are on a weight by weight basis.

The invention is explained in more detail with respect to the following example which is, however, not intended to limit the invention.

Example

In a single screw extruder for preparing silane crosslinkable polyethylene which is commercially available e. g. from the company BUSS AG, high density polyethylene (HDPE) obtained from the company BP-Solvay Polyethylene under the trademark Eltex is fed. The HDPE had the following characteristics: density: 0.940-0.945 kg/m$^3$; MFI$_{2.16}$ = 3-5g/10'.

The process conditions were set to allow a reaction time for the silane grafting of about 50 minutes. The temperatures in the kneader were 160 to 200°C and the throughput was 14 kg/h.

The grafting reaction was carried out with vinyltrimethoxysilane and di-tert-butylperoxide as a free radical source.

Samples were produced with the following increments of concentration of silane/peroxide mixture:

1. Standard concentration (as mentioned above)
2. Concentration increment: +12%
3. Concentration increment: +38%
4. Concentration increment: +50%

From each of the samples pipes were produced in an Amut Extruder 25L/D with a speed of 6 m/min using 5% of a high density polyethylene masterbatch containing a common crosslinking accelerator, like the commercially available catalyst masterbatch POLIDAN Catalyst PS made by Padanaplast.

Each pipe was crosslinked by immersion in a pool of water at 95°C for 48 hours, and a crosslinking analysis was carried out according to DIN 16892. For each sample the gel content was thus determined.

Granules were taken from each sample of silane crosslinkable polyethylene, and a 2 mm thick film was produced by a usual IR press. A transmission spectrum was made from each sample with a Perkin Elmer FTIR spectrometer. Using the standard FTIR software, from each spectrum the spectrum of the compound with 0% of silane was subtracted, and each spectrum was normalized using the $CH_3$ peak as reference. The area in the range of 1200 to 1000 $cm^{-1}$ was measured.

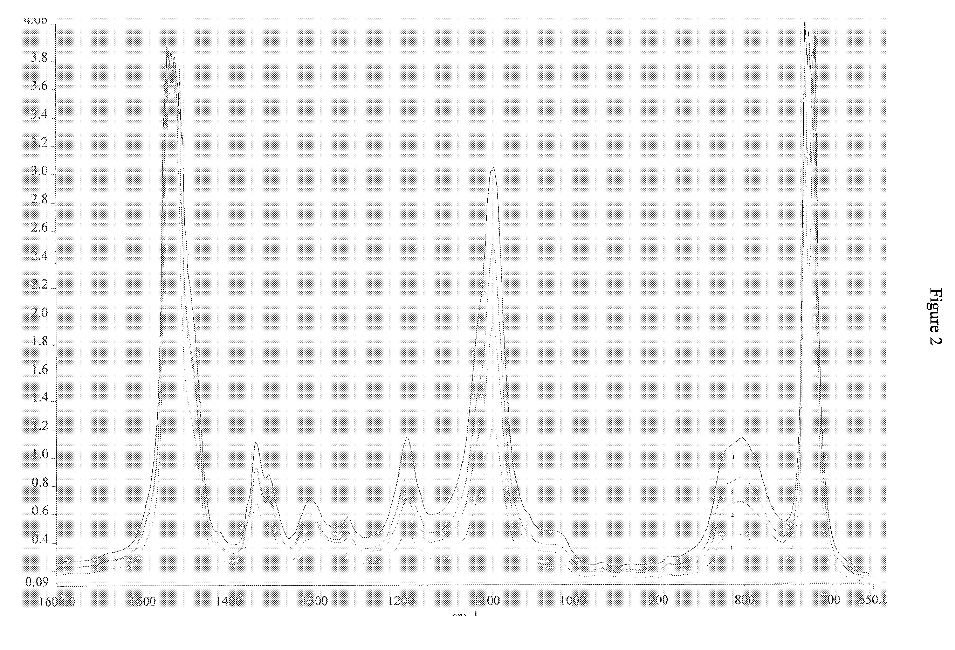

The normalized FTIR spectra of the 4 samples mentioned above are shown in figure 2.

For each sample the area of the IR spectrum was determined and correlated with the gel content. The following table summarizes the gel content and area of each sample:

| Sample | Area from 1200 to 1000 $cm^{-1}$ | Gel content (%) |
|---|---|---|
| 1 | 8.2 | 65 |
| 2 (+12%) | 10.3 | 73 |
| 3 (+38%) | 12.5 | 75 |
| 4 (+50%) | 13.8 | 78 |

The following function was used for the regression curve:

$$\text{Gel content in \%} = A \times LN \text{ (area of the IR spectrum)} + B.$$

In the following production the quality of the silane crosslinkable polyethylene was determined with the above regression curve, and every silane crosslinkable polyethylene which deviated by no more than 10% from the regression curve was considered as acceptable, while the silane crosslinkable polyethylene which was outside of this range was considered as not acceptable and was not used for preparing crosslinked shaped articles. These not acceptable products could be recycled.

**Claims**

1. Process for producing silane crosslinked (cured) polyethylene in which a polyethylene is grafted with a silane comprising at least one ethylenic double bond to a silane crosslinkable polyethylene which is then subjected to a crosslinking (curing) step, **characterized in that** the process comprises the following process steps:

   a) a sample is taken from the silane crosslinkable polyethylene before the curing step,

   b) the sample is processed into a film,

   c) the film is analyzed by Infrared Spectroscopy,

   d) a predefined area of the IR spectrum is determined and

   e) the area determined in step d) is correlated with the gel content in the silane crosslinked polyethylene after the curing step using a predetermined regression curve.

2. Process according to claim 1, wherein the polyethylene is a polyethylene homopolymer or a copolymer of ethylene and at least one other olefin.

3. Process according to claim 2, wherein the other olefin is selected from propylene, butene, octene, vinyl acetate, (meth)acrylate and mixtures thereof.

4. Process according to any of claims 1 to 3, wherein the silane comprising at least one ethylenic double bond is a vinyl silane.

5. Process according to claim 4, wherein the silane is selected from vinyltrimethoxysilane, vinyltriethoxysilane, vinylmethyldimethoxysilane and vinylmethyldiethoxysilane.

6. Process according to any of claims 1 to 5, wherein the predefined area of the IR spectrum is the area starting at a wave number in the range from 1150 $cm^{-1}$ to 1205 $cm^{-1}$ and ending at a wave number in the range from 1000 $cm^{-1}$ to 1085 $cm^{-1}$.

7. Process according to any of claims 1 to 6, wherein the grafting of the polyethylene with a silane comprising at least one ethylenic double bond to a silane crosslinkable polyethylene is carried out in the presence of a free radical source.

8. Process according to claim 7, wherein the free radical source is a peroxide, a diazo compound or radical generating irradiation.

9. Process according to any of claims 1 to 8, wherein the silane crosslinked (cured) polyethylene is at least a part of a shaped product.

10. Process according to claim 9, wherein in a first step the polyethylene is reacted with a free radical source and the silane to obtain granules of silane crosslinkable polyethylene and in a second step the granules of silane crosslinkable polyethylene are optionally mixed with a catalyst and formed into the shaped product which is then cured applying heat and water.

11. Process according to claim 10, wherein the sample in step a) is taken from the granules of silane crosslinkable polyethylene.

12. Process according to claim 7 to 11, wherein the regression curve used in step e) is obtained according to the following protocol:

   A) samples of silane crosslinkable polyethylene are produced from polyethylene containing a standard concentration of free radical source and varying concentrations of silane,

   B) samples of silane crosslinkable polyethylene are produced from polyethylene containing a standard concentration of the silane and varying concentrations of free radical source,

   C) optionally samples of silane crosslinkable polyethylene are produced from polyethylene containing varying concentrations of free radical source and varying concentrations of silane,

   D) each of the samples produced in A), B) and optionally C) above are cured, and the gel content of cured product is measured,

   E) of each of the samples produced in A), B) and optionally C) above films of controlled thickness are obtained and subjected to IR spectroscopy,

   F) from each of the spectra obtained in step E) above the spectrum of a sample which was produced without silane is subtracted, and the resulting spectra are normalized,

   G) a predefined area of each of the normalized spectra is determined,

   H) the areas of step G) are correlated with the gel content of the corresponding cured products obtained in step D) and the regression curve is calculated based on these data.

13. Process according to claim 12, wherein in step A) one sample with a silane concentration of 0% and five or more samples with varying silane concentrations are produced.

14. Process according to claim 12 or 13, wherein in step B) five or more samples with varying concentrations of free radical source are produced.

15. Process according to any of claims 12 to 14, wherein step C) is carried out and five or more samples with varying concentrations of silane and free radical source are produced.

**16.** Use of the following protocol for controlling the quality of shaped products of silane crosslinked polyethylene in a process in which polyethylene is reacted with peroxide and a vinylsilane at a high temperature to a silane crosslinkable polyethylene:

a) a sample is taken from the silane crosslinkable polyethylene,

b) the sample is processed into a film,

c) the film is analyzed by Infrared Spectroscopy,

d) a predefined area of the IR spectrum is determined and

e) the area determined in step d) is correlated with the gel content of a shaped product of silane crosslinked polyethylene using a predetermined regression curve.

Figure 1

Figure 2

**European Patent Office**

**EUROPEAN SEARCH REPORT**

Application Number

EP 03 10 4602

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 323 779 A (BOREALIS GMBH) 2 July 2003 (2003-07-02) * the whole document * ----- | 1-16 | C08F255/02 |
| A | EP 0 856 775 A (XEROX CORP) 5 August 1998 (1998-08-05) * page 5, line 1 - page 7, line 15 * ----- | 1-16 | |

| TECHNICAL FIELDS SEARCHED (Int.Cl.7) |
|---|
| C08F |

The present search report has been drawn up for all claims

| Place of search | Date of completion of the search | Examiner |
|---|---|---|
| Munich | 5 May 2004 | Van Golde, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**EP 1 541 601 A1**

## ANNEX TO THE EUROPEAN SEARCH REPORT
## ON EUROPEAN PATENT APPLICATION NO.

EP 03 10 4602

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2004

| Patent document cited in search report | | Publication date | Patent family member(s) | | Publication date |
|---|---|---|---|---|---|
| EP 1323779 | A | 02-07-2003 | EP | 1323779 A1 | 02-07-2003 |
| EP 0856775 | A | 05-08-1998 | US | 5650484 A | 22-07-1997 |
| | | | EP | 0856775 A1 | 05-08-1998 |
| | | | JP | 9029736 A | 04-02-1997 |
| | | | US | 5750909 A | 12-05-1998 |

EPO FORM P0459

For more details about this annex : see Official Journal of the European Patent Office, No. 12/82

14